(19) Europäisches Patentamt
European Patent Office
Office européen des brevets

(11) **EP 1 845 595 A1**

(12) **EUROPEAN PATENT APPLICATION**

(43) Date of publication:
**17.10.2007 Bulletin 2007/42**

(51) Int Cl.:
*H01S 3/0941* [(2006.01)]   *H01S 3/098* [(2006.01)]
*H01S 3/106* [(2006.01)]   *H01S 3/06* [(2006.01)]
*H01S 3/16* [(2006.01)]

(21) Application number: **07007456.2**

(22) Date of filing: **11.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **12.04.2006 JP 2006109379**

(71) Applicant: **Fujifilm Corporation**
**Minato-ku**
**Tokyo (JP)**

(72) Inventors:
• **Yamazoe, Shogo**
  **Ashigarakami-gun**
  **Kanagawa-ken (JP)**
• **Adachi, Takashi**
  **Ashigarakami-gun**
  **Kanagawa-ken (JP)**

(74) Representative: **Klunker . Schmitt-Nilson . Hirsch**
**Winzererstrasse 106**
**80797 München (DE)**

(54) **Optically anisotropic solid state laser pumped with perpendicularly polarized pump light**

(57)    A laser system with a solid state laser medium, having a broad oscillation spectrum with improved absorption efficiency of the laser medium for excitation light, which includes: a resonator (5) ; a solid state laser medium (6), disposed in the resonator (5), having optical anisotropy; and an excitation unit (10) for inputting excitation light (Le) to the solid state laser medium (6). The oscillation light is linear polarization light polarized in the direction substantially parallel to a first crystal axis of the solid state laser medium (6), and the excitation unit (10) linearly polarizes the excitation light (Le), and inputs to the solid state laser medium (6), with the polarization direction of the excitation light (Le) in a direction crossing the first crystal axis. In the solid state laser medium (6), an absorption coefficient for the excitation light (Le) in the polarization direction thereof is greater than an absorption coefficient for the excitation light (Le) in the first axis direction.

The solid state laser medium (6) is preferably a Yb: KYW or KGW, the host crystal having an optical anisothopy.

# FIG.2

EP 1 845 595 A1

## Description

BACKGROUND OF THE INVENTION

Field of the Invention

The present invention relates to a laser apparatus, in particular, to a laser apparatus having a solid state laser medium, within a resonator, which emits light by receiving excitation light from an excitation means.

Description of the Related Art

A solid state laser medium doped with Yb (ytterbium) is drawing widespread attention as a solid state medium for mode-locked lasers, since it allows excitation of high power InGaAs semiconductor laser and laser oscillation with high quantum efficiency, and shows no upper level energy absorption and density quenching, in addition to providing a broad fluorescence spectrum.

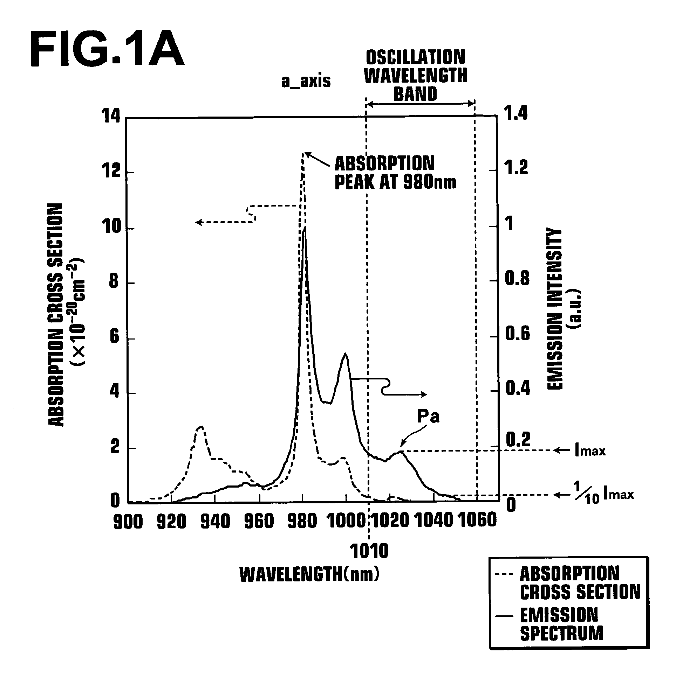

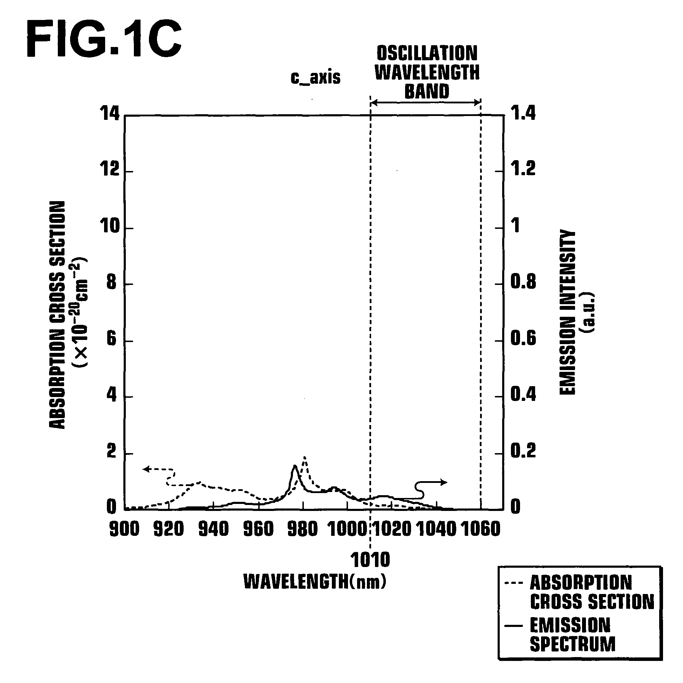

A solid state laser medium (hereinafter, Yb: KYW) formed of laser host medium having optical anisotropy, such as $KW(WO_4)_2$ medium (hereinafter, KYW), $KGd(WO_4)_2$ medium (hereinafter, KGW), doped with Yb has different emission spectra and absorption cross sections depending on its crystal axis, as illustrated in Figures 1A to 1C, which show wavelength dependence of absorption cross sections (indicated in dotted lines) and emission spectra (indicated in solid lines) of Yb:KYW in crystal axes "a", "b", and "c" respectively. Here, the absorption coefficient is proportional to the absorption cross section.

In the mean time, the relationship between the oscillation spectrum width $\Delta\nu$ and pulse width $\Delta\tau$ in mode-locked oscillation is expressed by Formula (1) below, and oscillation light having a broad oscillation spectrum is required in order to obtain a short pulse. That is, a broad emission spectrum is required.

$$\Delta\nu \times \Delta\tau = K \quad ---------- \quad (1)$$

where, K is a constant, and the value depends on the pulse shape: 0.44 for Gaussian type, and 0.315 for $sech^2$ type.

Here, when a comparison is made for emission spectrum characteristics of, for example, Yb:KYW, in the general oscillation wavelength band from 1010 to 1060nm, in "a", "b", and "c" axes, a widest emission spectrum appears in "b" axis. This means that a widest emission spectrum (frequency width) may be obtained by oscillation light having polarization in the direction parallel to "b" axis, that is, oscillation of a shortest pulse may be obtained by oscillation light having polarization in the direction parallel to "b" axis. Therefore, in conventional mode-locked laser systems having Yb: KYW, oscillation light polarized in the direction parallel to "b" axis is used.

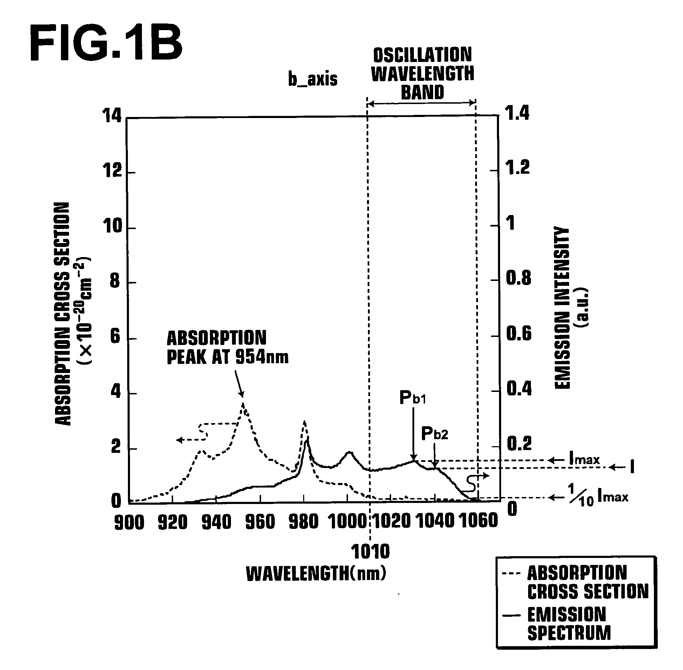

For example, in order to obtain pulse light with a short pulse width efficiently, a non-patent literature "Diode-Pumped Kerr-lens mode-locked Yb:KY(WO4)2 laser", OPTICS LETTERS, Vol. 26, No. 1, pp. 1723-1725, 2001, describes a mode-locked laser system, in which a solid state laser medium, Yb:KYW, is disposed in the resonator such that "b" axis thereof forms Brewster angle with the optical axis of the resonator so that resonator loss due to reflection of oscillation light at the end face of the Yb:KYW is minimized, and the oscillation light includes as many polarization components parallel to "b" axis as possible. Further, in order for excitation light from the semiconductor laser to be absorbed efficiently by the Yb:KYW, the excitation light is inputted to the Yb:KYW with its polarization direction aligned with that of the oscillation light to minimize the loss due to reflection of the excitation light reflected at the end face of the Yb:KYW, and a wavelength of 954nm is used for the excitation light so that the excitation light is absorbed by the Yb: KYW at an absorption peak of 954nm, which appears in the absorption cross section characteristics of "b" axis, as illustrated in Figure 1B.

As clear from Figures 1A and 1B, the absorption peak in the absorption cross section characteristics of "b" axis is small in comparison with that of "a" axis, which causes a problem of low absorption rate for the excitation light, i.e., low oscillation efficiency.

SUMMARY OF THE INVENTION

In view of the circumstances described above, it is an object of the present invention to provide a laser apparatus having a broad oscillation spectrum with improved absorption efficiency of solid state laser medium for excitation light.

A laser apparatus of the present invention is an apparatus, including:

a resonator;
a solid state laser medium, disposed within the resonator, having optical anisotropy; and
an excitation means for inputting excitation light to the solid state laser medium, wherein:

oscillation light is linear polarization light polarized in a direction substantially parallel to a first crystal axis of the solid state laser medium;
the excitation means is a means for linearly polarizing the excitation light, and inputting to the solid state laser medium, with the polarization direction thereof in a direction crossing the first crystal axis; and
in the solid state laser medium, an absorption coefficient for the excitation light in the polarization direction thereof is greater than an absorption coefficient for the excitation light in the first axis direction.

In particular, it is preferable that the polarization direction of the excitation light is substantially parallel to a second crystal axis of the solid state laser medium, and, in the solid state laser medium, an absorption coefficient for the excitation light in the second crystal axis direction shows a maximum value among absorption coefficients for the excitation light in respective crystal axis directions.

Preferably, in the solid state laser medium, the flatness of emission spectrum intensities in the first crystal axis direction is greater than the flatness of emission spectrum intensities in the polarization direction of the excitation light within a predetermined oscillation wavelength band.

Preferably, in the solid state laser medium, the integration value of emission spectrum distribution in the first crystal axis direction is greater than the integration value of emission spectrum distribution in the polarization direction of the excitation light within a predetermined oscillation wavelength band.

The referent of "a predetermined oscillation wavelength band" as used herein means an oscillation wavelength region desired by a user of the apparatus. In particular, if the solid state laser medium is a pseudo three-level system, it means an oscillation wavelength region where reabsorption loss of oscillation light is small, in which the absorption cross section to the stimulated emission cross section is approximately less than 10%.

Here, greater flatness in emission spectrum intensities means a wider spectrum width. The spectrum width is a wavelength region width within the predetermined oscillation wavelength band defined by wavelengths at which the intensity falls to 1/10 of a maximum peak intensity value within the predetermined oscillation wavelength band. If a plurality of peaks is present within the predetermined oscillation wavelength band, the spectrum width is defined as a wave length region in which the optical intensity ratio between the maximum peak and the other peaks is less than or equal to 1.5, and the bottom intensity between them is greater than or equal to 1/10 of the maximum peak intensity value, in addition to the above.

Preferably, the laser apparatus of the present invention further includes a polarization control means, within the resonator, for causing the oscillation light to be the linearly polarized light. As for the polarization control means, an optical member, such as Brewster plate, polarizer, polarization beam splitter, or birefringent medium, may be used. Alternatively, the solid state laser medium may be disposed, with one end face cut in Brewster angle with respect to the first crystal axis for this purpose.

If the oscillation spectrum of the solid state laser medium is sufficiently great in the first crystal axis direction in comparison with the spectra in other crystal axis directions, the oscillation light may become linearly polarized light polarized in the direction substantially parallel to the first crystal axis, without providing the polarization control means within the resonator.

Preferably, the solid state laser medium is a laser medium to which ytterbium is added.

Further, if the solid state laser medium is a KY$(WO_4)_2$ medium or a KGd$(WO_4)_2$ medium, it is preferable that the first crystal axis is "b" axis, and the second crystal axis is "a" axis.

The laser apparatus of the present invention may include a mode-locking device, within the resonator, to cause mode-locked oscillation.

The laser apparatus of the present invention may include a wavelength control device, within the resonator, so as to be used as a wavelength variable laser.

In the laser apparatus of the present invention, the oscillation light is linear polarization light polarized in the direction substantially parallel to the first crystal axis of the solid state laser medium, the excitation means is a means for linearly polarizing the excitation light, and inputting to the solid state laser medium, with the polarization direction of the excitation light in a direction crossing the first crystal axis, and, in the solid state laser medium, an absorption coefficient for the excitation light in the polarization direction thereof is greater than an absorption coefficient for the excitation light in the first axis direction. This allows the excitation light to be absorbed efficiently by the solid state laser medium, and thereby oscillation efficiency may be improved. In particular, in the solid state laser medium, if the flatness of emission spectrum intensities in the first crystal axis direction is greater than the flatness of emission spectrum intensities in the polarization direction of the excitation light within a predetermined oscillation wavelength band, the oscillation spectrum width may be broadened.

Further, in the solid state laser medium, if an absorption coefficient for the excitation light in the second crystal axis direction shows a maximum value among absorption coefficients for the excitation light in respective crystal axis directions, the absorption efficiency for the excitation light may be maximized.

BRIEF DESCRIPTION OF THE DRAWINGS

Figure 1A illustrates wavelength dependence of absorption cross section and an emission spectrum of Yb:KYW in "a" axis.

Figure 1B illustrates wavelength dependence of absorption cross section and an emission spectrum of Yb:KYW in "b" axis.

Figure 1C illustrates wavelength dependence of absorption cross section and an emission spectrum of Yb:KYW in "c" axis.

Figure 2 illustrates a schematic construction diagram of a mode-locked laser apparatus according to a first embodiment of the present invention.

Figure 3 is a perspective view of a solid state laser medium.

Figure 4 illustrates a schematic construction of a mode-locked laser apparatus according to a second embodiment of the present invention.
Figure 5 illustrates a solid state laser medium.
Figure 6 illustrates a schematic construction of a laser apparatus according to a third embodiment of the present invention.

DESCRIPTION OF THE PREFERRED EMBODIMENTS

Hereinafter, exemplary embodiments of the present invention will be described with reference to the accompanying drawings.

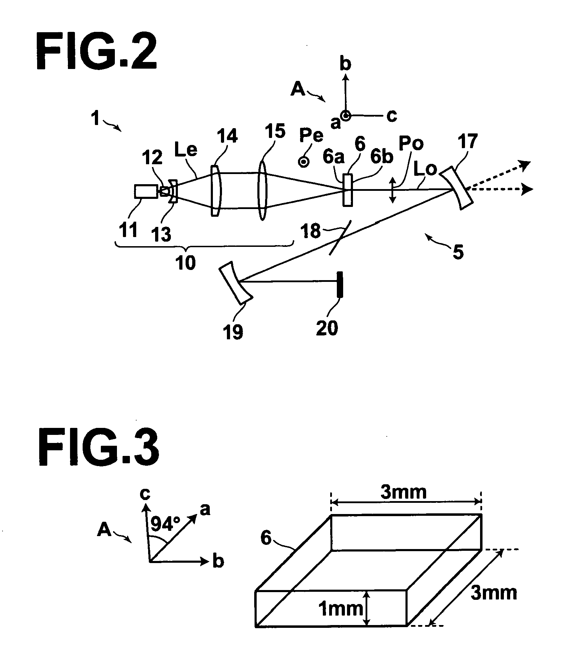

Figure 2 illustrates schematic construction of a mode-locked laser apparatus 1 according to a first embodiment of the present invention. The mode-locked laser apparatus 1 includes: a resonator 5; a solid state laser medium 6, disposed within the resonator 5, having optical anisotropy; an excitation means 10, disposed outside of the resonator 5, for inputting excitation light Le to the solid state laser medium 6; and a polarization control means 18 for controlling the polarization of oscillation light Lo.

The solid state laser medium 6 is a Yb:KYW made of a laser host of KYW doped with 5% of Yb (ytterbium). Optical anisotropy of the Yb:KYW is illustrated in Figures 1A to 1C. As illustrated, the absorption cross section peak (absorption peak wavelength of 980nm) for excitation light in "a" axis, the second crystal axis of the Yb:KYW, crossing "b" axis, the first crystal axis of the Yb:KYW, is greater than the absorption cross section peak (absorption peak wavelength of 954nm) for excitation light in "b" axis. Note that the absorption cross section peak in "a" axis is also greater than the absorption cross section peak in "c" axis, another crystal axis of the Yb:KYW; that is, the largest absorption cross section peak among all of the crystal axes. The flatness of the emission spectrum within a predetermined oscillation wavelength band (from 1010 to 1060nm, here) in "b" axis is greater than that in "a" axis. In "a" axis, a wavelength where the intensity corresponds to 1/10 of the intensity $I_{max}$ at a maximum peak $P_a$ within the predetermined oscillation wavelength band on the longer wavelength side is approximately 1045nm. Thus, the wavelength range, within the predetermined oscillation wavelength band, from a shortest wavelength to a wavelength where the intensity corresponds to 1/10 of the intensity at the maximum peak is from 1010 to 1045. In the mean time, in "b" axis, a wavelength where the intensity corresponds to 1/10 of the intensity $I_{max}$ at a maximum peak $P_{b1}$ on the longer wavelength side is near 1058nm, and the wavelength range, within the predetermined oscillation wavelength band, from a shortest wavelength to a wavelength where the intensity corresponds to 1/10 of the intensity at the maximum peak is from 1010 to 1058. This means that the spectrum width within the predetermined oscillation wavelength band in "b" axis is wider than that of "a" axis, that is, the flatness of the emission spectrum intensity is greater in "b" axis than in "a" axis. Note that the emission spectrum in "b" axis has a second peak $P_{b2}$, other than the maximum peak $P_{b1}$, but the intensity ratio between them is less than 1.5, and the intensities of wavelengths between the peaks are greater than 1/10 of the maximum peak value.

Here, the integration value of emission spectrum wavelength distribution in "b" axis, a first crystal axis of the solid state laser medium, is greater than the integration value of emission spectrum wavelength distribution in the polarization direction of the excitation light ("a" axis) within the predetermined oscillation wavelength band.

Here, the Yb:KYW solid state laser medium 6 (Yb:KYW 6) has an input face of 3x3 mm with a thickness of 1 mm in the optical axis direction, in which "a" axis and "b" axis, crystal axes of the medium, are parallel to the input face, as illustrated in Figure 3. Further, "b" axis orthogonally crosses "a" and "c" axes, and "c" and "a" axes cross with each other at an angle of 94 degrees. An end face 6a of the Yb:KYW 6 on the input side of the excitation light has an antireflection coating with a reflectance of less than or equal to 0.5% for a wide excitation light wavelength range of 980nm $\pm$ 10nm, and a total reflection coating with a reflectance of greater than or equal to 99.5% for wavelengths within a range from 1020 to 1060nm, which is slightly narrower than a predetermined oscillation wavelength band. The other end face 6b has an antireflection coating with a reflectance of less than or equal to 0.2% for a wide wavelength range from 1010 to 1060nm, which is the predetermined oscillation wavelength band. The crystal axes A ("a", "b", and "c" axes) of the Yb:KYW 6 are illustrated together in Figures 2 to 6 in order to facilitate understanding, but note that "c" axis is inclined by 4 degrees toward the depth direction from the surface in Figures 2, and 4 to 6.

The excitation means 10 is a means for linearly polarizing excitation light Le and inputting to the solid state laser medium 6, with the polarization direction Pe parallel to a second crystal axis of the medium ("a" axis, here) . The excitation means 10 includes: a broad area type semiconductor laser 11 for outputting the excitation light Le; an aspherical lens 12 with an f value of 0.8mm; cylindrical lenses 13, 14 with f values of -7.7 and 70 respectively; and an achromatic lens 15 with an f value of 60. The semiconductor laser 11 is disposed such that the polarization direction Pe of the excitation light Le corresponds to "a" axis of the Yb:KYW 6. The optical axis of the excitation light Le is aligned with the optical axis of the resonator by the condenser lens system of lenses 12 to 15, and the excitation light is inputted to the Yb:KYW 6 such that the beam waist of the excitation light is positioned in the center of the Yb:KYW 6. The semiconductor laser 11 has an emission width of $100\mu m$, and may form an excitation light beam waist of $50\times140\mu m$ in the Yb:KYW 6 through the condenser lens system.

The resonator 5 has a structure of Z type resonator, and includes an end face 6a of the solid state medium 6 at one terminal, and a saturable absorption mirror device 20, which is a mode-locking device, at the other terminal. It further includes an output mirror 17 and resonator mirror 19 between the two terminals. As for the saturable absorption mirror device 20, a semiconductor saturable absorption mirror device (SESAM (produced by BATOP)) having an absorptance of 0.7 for a wavelength of 1040nm is used. As for the output mirror 17, a concave mirror with a curvature radius of 50mm and having a transmittance of 2% for an oscillation wavelength range of 1010 to 1060, which is the predetermined oscillation wavelength band. The output mirror 17 is disposed at a position away from the Yb:KYW 6 by 28mm. The resonator mirror 19 is a concave mirror with a curvature radius of 50mm, which is disposed away from the SESAM 20 by 28mm. The distance between the output mirror 17 and the resonator mirror 19 is 250mm. An oscillation beam waist having a diameter of $32\mu m$ may be formed in the Yb: KYW 6 and on the SESAM 20 by this resonator structure.

As for the polarization control means 18 for controlling the polarization of the oscillation light Lo, a Brewster plate 18 is disposed, inclined by Brewster angle in the "b" axis direction of the Yb:KYW, which controls the polarization direction Po of the oscillation light Lo in the direction parallel to "b" axis of the Yb:KYW 6.

As the absorption cross section characteristics in Figure 1A illustrate, the highest absorption peak appears at a wavelength of 980nm. Thus, if a solid state laser medium is excited by excitation light, which has a wavelength of 980nm and is polarized in the direction parallel to "a" axis thereof, the excitation light may be absorbed most efficiently by the solid state laser medium. In the mean time, as for the emission spectrum characteristics within the predetermined wavelength range (1010 to 1060), the flattest characteristics appear in "b" axis. Thus, oscillation light polarized in the direction parallel to "b" axis has the widest oscillation spectrum width, and thereby output light of shortest pulse width may be obtained.

The mode-locked laser apparatus 1 may provide a reduced pulse width, by using oscillation light polarized in the direction parallel to "b" axis as the oscillation light, and increase absorptance for the excitation light by using light polarized in the direction parallel to "a" axis as the excitation light in comparison with a conventional apparatus that uses oscillation light and excitation light both having the polarization direction parallel to "b" axis. That is, a short pulse output may be obtained more efficiently than in the past.

More specifically, when the mode-locked laser apparatus 1 is used, two pulse light beams having an average output power of 400mW with a pulse width of 1.2psec and a repetition frequency of 490MHz may be obtained for an excitation power of 2W.

In the present embodiment, if the resonator mirror 19 is replaced by a mirror for compensating dispersion within the resonator, the pulse width may be reduced further, and a pulse width of less than 100fsec is possible in theory.

Note that in mode-locked oscillation by a solid state laser medium having optical anisotropy, which is different from the Yb: KYW, a pulse light beam having a short pulse width may be obtained most efficiently by polarizing the excitation light in the direction where the absorption cross section becomes maximum, and polarizing the oscillation light in the direction where the spectrum width becomes maximum independently.

In the present embodiment, the description has been made of a case in which the excitation light linearly polarized in the direction parallel to "a" axis of the solid state laser medium is inputted thereto. But the polarization direction of the excitation light is not necessarily the direction along "a" axis, it may be any direction as long as it provides a greater absorptance of the excitation light than the absorptance of the excitation light in the polarization direction of the oscillation light ("b" axis), and crosses "b" axis.

The mode-locked laser apparatus 1 uses a Brewster plate as the polarization control device. Alternatively, a polarizer or a polarization beam splitter may also be used. The polarization control may also be implemented using a birefringent medium, such as calcite, crystal quartz, or YVO4, in which one of the two polarization optical axes separated by the walk-off developed in the birefringent medium is used as the optical axis of the resonator.

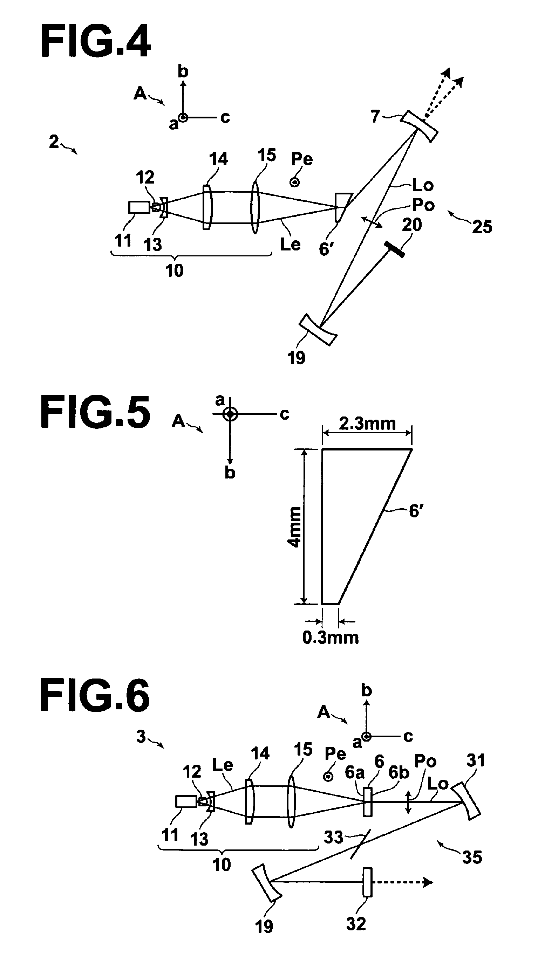

Figure 4 illustrates a schematic construction of a mode-locked laser apparatus 2 according to a second embodiment of the present invention. In the second embodiment, elements identical to those in the first embodiment are given the same reference numerals, and will not be elaborated upon further here.

The mode-locked laser apparatus 2 of the second embodiment includes a solid state laser medium 6' with one end face cut in Brewster angle with respect to "b" axis, as illustrated in Figure 5. Here, the solid state laser medium 6' also acts as polarization control means for controlling the polarization of oscillation light, so that the Brewster panel used as the polarization control means in the first embodiment is not required. The reduction in the number of optical members within the resonator reduces internal loss of the resonator, and may obtain pulse light efficiently. Further, the reduction in the number of parts may result in low manufacturing cost of the apparatus.

Further, the output mirror 17 and SESAM 20 used in the mode-locked laser apparatus 1 in the first embodiment may be replaced respectively by a resonator mirror and a SOC (saturable output coupler, produced by BATOP), which is a transmissive semiconductor saturable absorption mirror device. In this case, a single main beam may be outputted, which means that pulse light may be obtained more efficiently.

Still further, SESAM 20 may be replaced by an output mirror, and a pulse oscillation by kerr lens mode-locking (KLM) that makes use of kerr effect of the solid state laser medium may be implemented. In this case, the internal loss of the resonator due to absorption of the oscillation light by the SESAM may be eliminated, so that pulse light may be obtained further efficiently.

Figure 6 illustrates a schematic construction of a laser apparatus 3 according to a third embodiment of the present invention. The laser apparatus 3 is a wavelength variable laser, and has a resonator 35, in which the output mirror 17, SESAM 20, and Brewster plate 18 of the model-locked laser apparatus 1 in the first embodiment illustrated in Figure are replaced respectively by a resonator mirror 31, an output mirror 32 having a transmittance of 1% for a wide oscillation wavelength band from 1010 to 1060nm, and a birefringent filter 33, which is a wavelength modulation device.

The polarization direction Po of the oscillation light Lo may be arranged parallel to "b" axis by disposing the birefringent filter 33, inclined by Brewster angle in the "b" axis direction of Yb:KYW 6 with respect to the optical axis of the resonator.

For a wavelength variable laser, as in a mode-locked laser apparatus, it is preferable that the emission spectrum is wide within a predetermined oscillation wavelength band, i.e., the output power is uniform within the predetermined oscillation wavelength band. The Yb: KYW 6 provides oscillation light polarized in "b" axis, which has a wide emission spectrum width within an oscillation wavelength band from 1010 to 1060nm, so that it is suited for a wavelength variable laser. In the laser apparatus 3, laser beams with wavelengths within the range from 1010 to 1060nm may be obtained by rotating the birefringent filter 33 around the optical axis of the resonator.

Also in the laser apparatus 3, the solid state laser medium is excited by excitation light polarized in the direction parallel to "a" axis, so that a high absorption efficiency may be obtained, thereby resulting in high oscillation efficiency. Thus, a broadband wavelength variable laser with high oscillation efficiency may be realized.

In the laser apparatus 3 according to the third embodiment, an etalon may be used as the wavelength variable device.

In the embodiments described above, a laser medium made of KYW doped with Yb is used as the solid state laser medium, but KGW having an identical optical anisotropic crystal structure to that of KYW may be used as the host medium, in which case identical advantageous effects may be obtained.

Other laser host media may include YVO4, GdVO4, and SYS, which have optical anisotropy. Each of the solid state laser media may provide a wide oscillation spectrum width, and allows efficient excitation to improve the oscillation efficiency, as in the embodiments described above, by oscillating the oscillation light having a polarization direction substantially parallel to the crystal axis of the solid state laser medium where the flattest emission spectrum width within a predetermined oscillation wavelength band is obtained, polarizing excitation light in a direction having an excitation light absorption coefficient greater than that in the crystal axis parallel to the polarization direction of the oscillation light, and inputting the excitation light to the solid state laser medium. Accordingly, each of the solid state laser media may be used as an efficient short pulse laser, or a wavelength variable laser.

## Claims

1. A laser apparatus which includes a resonator (5); a solid state laser medium (6), disposed within the resonator, having optical anisotropy; and an excitation means (10) for inputting excitation light (Le) to the solid state laser medium (6), **characterized in that**:

   oscillation light (Lo) is linear polarization light polarized in a direction substantially parallel to a first crystal axis of the solid state laser medium (6);
   the excitation means (10) is a means for linearly polarizing the excitation light (Le), and inputting to the solid state laser medium(6), with the polarization direction thereof in a direction crossing the first crystal axis; and
   in the solid state laser medium (6), an absorption coefficient for the excitation light (Le) in the polarization direction thereof is greater than an absorption coefficient for the excitation light (Le) in the first axis direction.

2. The laser apparatus according to claim 1, **characterized in that**:

   the polarization direction of the excitation light (Le) is substantially parallel to a second crystal axis of the solid state laser medium (6); and
   in the solid state laser medium (6), an absorption coefficient for the excitation light (Le) in the second crystal axis direction shows a maximum value among absorption coefficients for the excitation light(Le) in respective crystal axis directions.

3. The laser apparatus according to claim 1 or 2, **characterized in that**, in the solid state laser medium (6), the flatness of emission spectrum intensities in the first crystal axis direction is greater than the flatness of emission spectrum intensities in the polarization direction of the excitation light (Le) within a predetermined oscillation wavelength band.

4. The laser apparatus according to claim 1 or 2, **characterized in that**, in the solid state laser medium (6), the integration value of emission spectrum distribution in the first crystal axis direction is greater than the integration value of emission spectrum distribution in the polarization direction of the excitation light (Le) within a predetermined oscillation wavelength band.

5.  The laser apparatus according to any of claims 1 to 4, **characterized in that** the apparatus further comprises a polarization control means (18), within the resonator (5), to cause the oscillation light (Lo) to become the linear polarization light.

6.  The laser apparatus according to any of claims 1 to 5, wherein ytterbium is added to the solid state laser medium (6).

7.  The laser apparatus according to any of claims 1 to 6, **characterized in that**:

    the solid state laser medium (6) is a $KY(WO_4)_2$ medium or a $KGd(WO_4)_2$ medium; and
    the first crystal axis is "b" axis, and the second crystal axis is "a" axis.

8.  The laser apparatus according to any of claims 1 to 7, **characterized in that** the apparatus further comprises a mode-locking device, within the resonator (5), to cause mode-locked oscillation.

9.  The laser apparatus according to any of claims 1 to 7, **characterized in that** the apparatus further comprises a wavelength control device, within the resonator (5), so as to be used as a wavelength variable laser.

# FIG.1A

# FIG.1B

# FIG.1C

# FIG.2

# FIG.3

# FIG.4

# FIG.5

# FIG.6

**European Patent Office**

**EUROPEAN SEARCH REPORT**

Application Number

EP 07 00 7456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STEVEN R BOWMAN: "Lasers Without Internal Heat Generation" IEEE JOURNAL OF QUANTUM ELECTRONICS, vol. 35, no. 1, January 1999 (1999-01), pages 115-122, XP011052118 | 1-4,6,7 | INV. H01S3/0941 H01S3/098 H01S3/106 |
| Y | * page 119, right-hand column, paragraph V - page 120, right-hand column; figures 3,4; table 1 * | 5,8,9 | ADD. H01S3/06 H01S3/16 |
| Y | BRUNNER F ET AL: "240-fs pulses with 22-W average power from a passively mode-locked thin-disk Yb:KY(WO4)2 laser" CONFERENCE ON LASERS AND ELECTRO-OPTICS. (CLEO 2002). TECHNICAL DIGEST. POSTCONFERENCE EDITION. LONG BEACH, CA, MAY 19 - 24, 2002, TRENDS IN OPTICS AND PHOTONICS. (TOPS), WASHINGTON, WA : OSA, US, vol. VOL. 73, 19 May 2002 (2002-05-19), pages 24-24, XP010606387 ISBN: 1-55752-706-7 * the whole document * | 5,8,9 | |
| X | FLOOD C J ET AL: "CW DIODE PUMPING AND FM MODE LOCKING OF A ND:KGW LASER" APPLIED PHYSICS B: LASERS AND OPTICS, SPRINGER INTERNATIONAL, BERLIN, DE, vol. B60, no. 2/3, 1 February 1995 (1995-02-01), pages 309-312, XP000494885 ISSN: 0946-2171 * page 309, right-hand column, paragraph 2 - page 310, left-hand column; figures 1,4 * | 1,2,5, 7-9 | TECHNICAL FIELDS SEARCHED (IPC) H01S |

-/--

The present search report has been drawn up for all claims

| Place of search | Date of completion of the search | Examiner |
|---|---|---|
| Munich | 6 July 2007 | Laenen, Robert |

**European Patent Office**

**EUROPEAN SEARCH REPORT**

Application Number

EP 07 00 7456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/042522 A1 (SUTTER DIRK [US] ET AL) 4 March 2004 (2004-03-04) * paragraphs [0022] - [0035]; figures 1-4 * | 1,4,6,7 | |
| X | US 5 517 516 A (MARSHALL CHRISTOPHER D [US] ET AL) 14 May 1996 (1996-05-14) * column 3, line 58 - column 5, line 44; figures 1,3,5 * | 1 | |
| X | JP 04 137775 A (NIPPON ELECTRIC CO) 12 May 1992 (1992-05-12) * abstract * | 1 | |
| A | KLOPP P ET AL: "Passively mode-locked Yb:KYW laser pumped by a tapered diode laser" OPTICS EXPRESS, OPTICAL SOCIETY OF AMERICA, WASHINGTON, DC,, US, vol. 10, no. 2, January 2002 (2002-01), pages 108-113, XP002295330 ISSN: 1094-4087 * the whole document * | 1,5-8 | TECHNICAL FIELDS SEARCHED (IPC) |

The present search report has been drawn up for all claims

| Place of search | Date of completion of the search | Examiner |
|---|---|---|
| Munich | 6 July 2007 | Laenen, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 00 7456

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2007

| Patent document cited in search report | | Publication date | Patent family member(s) | Publication date |
|---|---|---|---|---|
| US 2004042522 | A1 | 04-03-2004 | NONE | |
| US 5517516 | A | 14-05-1996 | NONE | |
| JP 4137775 | A | 12-05-1992 | NONE | |

EPO FORM P0459

For more details about this annex : see Official Journal of the European Patent Office, No. 12/82

**REFERENCES CITED IN THE DESCRIPTION**

**Non-patent literature cited in the description**

- Diode-Pumped Kerr-lens mode-locked Yb:KY(WO4)2 laser. *OPTICS LETTERS,* 2001, vol. 26 (1), 1723-1725